# EUROPEAN PATENT APPLICATION

(11) **EP 4 570 952 A1**
(43) Date of publication of application: **18.06.2025**
(21) Application number: 23216904.5
(22) Date of filing: 14.12.2023
(51) Int. Cl.: C25B 1/04, C25B 11/031, C25B 11/052, C25B 11/069, C25B 11/075, C25B 11/077, C25B 11/081

(54) **METHOD FOR PREPARING HIGH-PERFORMANCE METAL POROUS ELECTRODES**

(71) Applicant: VITO NV, 2400 Mol (BE)
(72) Inventor: CHEN, Zhiyuan, 2400 Mol (BE); DE SCHEPPER, Wim, 2400 Mol (BE); TILAHUN TSEHAYE, Misgina, 2400 Mol (BE); VAES, Jan, 2400 Mol (BE)
(74) Representative: AWA Benelux

(57) **Abstract**

The present invention is related to a method of producing a porous electrode comprising: preparing a slurry comprising a solvent, between 1 % and 25 % by weight of a polymeric binder material and between 10 % and 80 % by weight of particles comprising an electrochemically active material, based on the total weight of the slurry, the polymeric binder material being at least partially dissolved in the solvent; applying the slurry to a porous electrically conductive support; and subjecting the slurry of the coated support comprising the slurry to phase inversion, thereby forming the porous electrode, which comprises the porous electrically conductive support and a porous composite comprising a porous matrix, comprising the polymeric binder material, and the particles comprising the electrochemically active material, wherein the particles are dispersed in the porous matrix, wherein the weight ratio of the polymeric binder material to the particles in the slurry is between 2:98 and 50:50, and wherein a total amount of the polymeric binder material and the particles in the slurry is between 32 % and 80 % by weight, based on the total weight of the slurry. The invention further relates to a porous electrode comprising a porous electrically conductive support and a porous composite comprising a porous matrix, comprising a polymeric binder material, and particles comprising an electrochemically active material.

## Description

### Technical field

The present invention is related to a method of producing a porous electrode, in particular a porous electrode comprising a porous electrically conductive support and an electrochemically active material. The present invention is further related to a porous electrode, in particular as obtained by methods of the invention.

### Background art

Water electrolysis is an electrochemical process that involves the decomposition of water into its constituent elements, hydrogen and oxygen, using an external electrical energy source. It is a promising technology with a wide range of applications, including hydrogen production for clean fuel, energy storage, and industrial processes. Water electrolysis plays an important role in the development of sustainable energy solutions. As a clean and renewable process, it enables the production of hydrogen, a versatile energy carrier that can be used in fuel cells, industrial processes, and as a clean transportation fuel. When coupled with renewable energy sources like solar and wind, water electrolysis offers an efficient method for energy storage and grid balancing, addressing the intermittency of renewables.

Electrolysis is carried out in an electrolysis cell. An electrolysis cell consists of a membrane, an anode and a cathode which are immersed in an electrolyte. When an electric current is applied through an external power source, redox reactions occur at the electrodes.

There are primarily two types of electrolytic media: solid electrolytes and liquid electrolyte solutions. Known solid electrolytes include proton exchange membranes, anion exchange membrane and solid oxide ceramic electrolytes. Known liquid electrolytes include aqueous alkaline solutions and aqueous acidic solutions.

In proton exchange membrane electrolysis, a proton exchange membrane (PEM) separates the anode and cathode compartments, and conducts protons. PEM electrolysis has gained importance due to its ability to operate at relatively low temperatures and pressures. The PEM electrolysis technology offers fast response times, high efficiency, and good controllability. However, the reliance on expensive platinum-based catalysts poses cost challenges for widespread adoption.

Solid oxide ceramic electrolytes are used in solid oxide electrolysis cells (SOECs), which operate at high temperatures. The high-temperature operation allows for efficient heat integration with other industrial processes. However, SOECs require robust materials that can withstand these high temperatures.

In acidic electrolysis, an aqueous solution comprising a strong acid such as sulphuric acid and hydrochloric acid is used as the electrolyte. However, managing concentrated acid electrolytes poses corrosion problems, and the technical solutions are expensive.

In alkaline electrolysis, an aqueous solution comprising a strong alkaline electrolyte solution such as potassium hydroxide is used. Alkaline electrolysis is one of the earliest and most mature electrolysis technologies. It typically operates at relatively elevated temperatures (60-90 °C) and pressures up to 30 bar. Today, typically used electrodes include nickel-based electrodes and iron-based electrodes. The process is characterized by its relatively low capital cost, long-term stability, and scalability, making it suitable for large-scale hydrogen production.

Commercially available electrodes for electrolysis cells used in industrial alkaline electrolysis systems include electrodes based on nickel deposited on steel, such as steel meshes coated with nickel, and solid nickel, such as nickel stretched metal, nickel wire meshes and nickel foams. However, these electrodes tend to have limited catalytic activity, i.e. limited conversion rates of water into hydrogen and oxygen at a given power input to the cell, and are often either rigid and/or brittle.

Freestanding µm-thin nanomesh electrodes exceeding 100x current density enhancement for high-throughput electrochemical applications, N. Plankensteiner, R. Rupp et al., Materials Today Energy, vol. 30, 2022, 101172 discloses the fabrication of a freestanding metal electrodes having a thickness of a few micrometers, for use in water electrolysis. The electrode is a three-dimensional (3D) porous nanomesh consisting of a 3D-network of regular interconnected nanowires. The nanomesh has a high surface area and a high porosity of between 85 % and 97 %. To ensure that the nanowire-network is mechanically stable while maintaining its accessibility from all sides to allow for water and gas transport, a porous support structure is required.

Improving the water splitting performance of nickel electrodes by optimizing their pore structure using a phase inversion method, Ruigen Ding, Shengsheng Cui et al., Catalyst Science & Technology, issue 14, 2017, discloses porous nickel electrodes produced by a method including phase inversion and tape casting, followed by a heat treatment to remove the polymer. The nickel electrodes contain finger-like straight open pores with an average diameter of approx. 100 µm and smaller pores with an average diameter between 1 µm and 3 µm in the walls. The electrode can be used for the oxygen evolution reaction (OER), as well as for the hydrogen evolution reaction (HER).

Disadvantages of the foregoing porous nanomesh electrodes is that that they are brittle, limiting their use; and in that the pores in the electrodes obtained using a phase inversion method are large, with a high internal electrical resistance and consequently a low electrochemical activity.

The problem with today's highly porous (metal) electrodes is that they have a small electrochemical surface area for electrochemical reactions. The majority of studies aim to coat or grow a catalyst layer on top of porous electrodes. However, the adhesion of such catalyst layers to the porous electrodes is known to be poor, thereby limiting the long-term stability and the durability of these electrodes in the electrolyser, and thus also the lifetime of the electrolyser.

### Summary of the invention

The present invention aims to overcome one or more of the above drawbacks. It is an aim of the invention to provide methods of obtaining a porous electrode, in particular a porous electrode comprising a porous matrix comprising a polymeric binder material and particles comprising an electrochemically active material, which is less complex. It is a further aim to provide methods of producing such porous electrodes which are less expensive than existing methods.

Another aim of the present invention is to provide a porous electrode, in particular a porous electrode comprising a porous matrix comprising a polymeric binder material and particles comprising an electrochemically active material, which has an excellent stability and durability when compared to existing porous electrodes. It is a further aim to provide porous electrodes which, in use, have an excellent electrochemical performance and efficiency, excellent mass transport properties, ionic diffusion, and/or lifetime.

According to a first aspect of the invention, there is provided a method for producing a porous electrode as set out in the appended claims.

The porous electrode produced by the method comprises or substantially consists of a porous electrically conductive support and a porous composite. The porous composite comprises or substantially consists of a porous matrix and particles comprising or substantially consisting of an electrochemically active material. The porous matrix comprises or substantially consists of a polymeric binder material. The particles comprising or substantially consisting of an electrochemically active material are dispersed (i.e. embedded) in the porous matrix.

The method comprises preparing a slurry, applying the slurry on a porous electrically conductive support, and subjecting the slurry of the coated support comprising the slurry to phase inversion, thereby obtaining the porous electrode.

The slurry comprises a solvent, a polymeric binder material and particles comprising or substantially consisting of an electrochemically active material.

Advantageously, the polymeric binder material is at least partially, preferably substantially entirely, dissolved in the solvent, for example at least 50 % of the polymeric binder material is dissolved in the solvent, such as at least 75 %, at least 80 %, preferably at least 90 %, more preferably at least 95 %, at least 98 %, most preferably at least 99 %, or 100%.

A total amount of polymeric binder material and particles in the slurry is between 32 % and 80 % by weight, preferably between 35 % and 75 % by weight, more preferably between 35 % and 70 % by weight, based on the total weight of the slurry.

The weight ratio of the polymeric binder material to the particles in the slurry is between 2:98 and 50:50, preferably between 5:95 and 50:50, more preferably between 10:90 and 50:50, even more preferably between 20:80 and 50:50, for example between 30:70 and 50:50, or between 40:60 and 50:50.

Advantageously, the polymeric binder material comprises or substantially consists of a non-ion conductive polymer. Non-limiting examples of non-ion conductive polymers include polysulfone (PSU), polyethersulfone, polyvinylidene fluoride, poly(acrylonitrile), polyethylene-co-vinylalcohol, polycarbonate, polyimide, polyamide, polyamide-imide, polyether imide, ionomers, N-ionomers, cellulose acetate, and copolymers of two or more thereof.

Advantageously, the slurry comprises between 1 % and 25 % by weight of the polymeric binder material, preferably between 1% and 20 % by weight, based on the total weight of the slurry.

Advantageously, the slurry comprises between 10 % and 80 % by weight of particles comprising or substantially consisting of an electrochemically active metal, preferably between 15 % and 75 % by weight, more preferably between 15 % and 70 % by weight, based on the total weight of the slurry.

The term "electrochemically active metal" or "electrochemically active material" as used herein, is used to refer to the capacity of a material, including, without being limited thereto, a metallic solid, a metal oxide or a metal dichalcogenide, to participate in electrochemical reactions in which electrons are exchanged between chemical substances.

Advantageously, the electrochemically active material comprises or substantially consists of an electrochemically active metal selected from the group consisting of nickel, tin, copper, iron, manganese, cobalt, zinc, titanium, bismuth, selenium, and noble metals.

Advantageously, the electrochemically active material, in particular the electrochemically active metal, is present in the particles as one or a combination of a metallic solid, a metal oxide, or a metal dichalcogenide.

Advantageously, the particles have an average particle size between 1 nm and 250 µm, preferably between 5 nm and 200 µm, more preferably between 10 nm and 100 µm. The average particle size can be determined using any a method known to the skilled artisan, including for example laser diffraction or electron microscopy such as Scanning Electron Microscopy (SEM). Advantageously, the average particle size of the particles in the slurry is measured by means of SEM.

Advantageously, the particles comprising or substantially consisting of the electrochemically active material have a multimodal, in particular a bimodal particle size distribution. A multimodal particle size distribution implies that fractions with different ranges in (average) particle sizes are used in the manufacturing of the porous electrodes with the methods as herein disclosed.

For example, in case of a bimodal particle size distribution one fraction of the particles has a size in a first size range, for example the micrometer range, and a second fraction of the particles has a size a second size range, for example in the nanometer range. Whereas the nanoparticles provide a high electrochemically active surface area but are more expensive, the larger particles in the micrometer range ensure good electrochemical contact and percolation and are less expensive. Consequently, a combination of nanoparticles and particles in the micrometer range, i.e. particles having a bimodal particle size distribution, allows to combine the advantages of both size ranges of particles, and to reduce the cost when compared to using only nanoparticles,

Advantageously, the particles comprising or substantially consisting of the electrochemically active material have a bimodal particle size distribution. Advantageously, between 25 % and 75 % of the particles have a size between 1 µm and 250 µm, preferably between 5 µm and 200 µm, more preferably between 5 µm and 150 µm, and between 75 % and 25 % of the particles have a size between 1 nm and 750 nm, preferably between 5 nm and 500 nm, more preferably between 10 nm and 250 nm. In other words, the particles consist of a mixture of a fine fraction and a coarse fraction, wherein: the fine fraction has an average particle size between 5 nm and 500 nm (as measured by laser diffraction or SEM) and the coarse fraction has an average particle size between 1 µm and 250 µm (as measured by laser diffraction or SEM), wherein the fine fraction is between 25% and 75% by weight of the particles and the coarse fraction is between 25 % and 75 % by weight.

Advantageously, the solvent has a boiling point of at least 175 °C, preferably at least 180 °C, such as at least 190 °C at an atmospheric pressure of 1 bar.

Advantageously, the slurry can further comprise between 0.5 % and 15 % by weight of a pore forming agent, preferably between 1 % and 10 % by weight, based on the total weight of the slurry. It will be understood that the optional use of a pore forming agent, and the amount thereof, depends on the composition of the slurry, on the structure of the slurry components, and on the degree of porosity of the porous electrode that is to be obtained or realised.

The inventors have surprisingly discovered that when the slurry comprises between 1 % and 10 % by weight of pore forming material, based on the total weight of the slurry, the pore formation is significantly facilitated, with an increased porosity of the porous matrix.

Advantageously, when the slurry comprises a pore forming agent, the pore forming agent is at least partially, preferably substantially entirely, dissolved in the solvent, for example at least 50 % of the pore forming agent is dissolved in the solvent, such as at least 75 %, at least 80 %, preferably at least 90 %, more preferably at least 95 %, at least 98 %, most preferably at least 99 %, or 100%.

Advantageously, the porous electrically conductive support comprises or substantially consists of one or more of the group consisting of nickel, silver, gold, aluminium, tungsten, zinc, lithium, iron, platinum, tin, titanium, manganese, and stainless steel, of which nickel, aluminium, zinc, iron and stainless steel are preferred. A particularly preferred electrochemically active metal is nickel. Advantageously, the electrochemically active material is present in the particles as one or a combination of a metallic solid, a metal oxide, or a metal dichalcogenide, for example a selenide or a sulphide. Non-limiting examples include ZnO, BiSe, CuS, CuO and (Cu,Ag)OₓS_{y}.

Advantageously, the slurry is applied by means of coating the porous electrically conductive support structure with the slurry. Alternatively or additionally, yet also advantageously, the slurry is applied by means of impregnating the porous electrically conductive support with the slurry.

Advantageously, phase inversion of the slurry of the coated support comprising the slurry (i.e. the support having the slurry applied thereto) comprises exposing the slurry to, e.g. contacting it with, a non-solvent for the polymeric binder material. This induces demixing of the slurry into a polymeric binder material rich phase and a polymeric binder material poor phase. Upon further separation, the solubility of the polymeric binder material in the solvent is reduced and the polymeric binder material precipitates, so that a solid phase with specific porous morphology is formed, thereby obtaining the porous electrode comprising or substantially consisting of a porous electrically conductive support and a porous matrix comprising or substantially consisting of the polymeric binder material and the particles comprising or substantially consisting of an electrochemically active material.

Advantageously, the solvent comprises a polar aprotic solvent and the non-solvent for the polymeric binder material comprises a polar protic solvent.

According to a second aspect of the invention, there is provided a porous electrode as set out in the appended claims.

The porous electrode is advantageously made, i.e. prepared, produced or manufactured, by a method according to the first aspect of the invention.

The porous electrode comprises or substantially consists of a porous electrically conductive support and a porous composite. The porous composite comprises or substantially consists of a porous matrix and particles comprising or substantially consisting of an electrochemically active material. The porous matrix comprises or substantially consists of a polymeric binder material. The particles comprising or substantially consisting of an electrochemically active material are dispersed (i.e. embedded) in the porous matrix.

Advantageously, the porous electrically conductive support, the polymeric binder material and the particles comprising an electrochemically active material are as described hereinabove.

The porous composite comprises between 2 % and 50 % by weight, preferably between 2 % and 45 % by weight, more preferably between 5 % and 40 % by weight, of polymeric binder based on the total weight of the porous composite.

The porous composite further comprises between 50 % and 98 % by weight of the particles, preferably between 55 % and 98 %, more preferably between 60 % and 95 %, based on the total weight of the porous composite.

The porous electrode has a porosity equal to or higher than 40 %, preferably at least 50 %, more preferably at least 60 %, wherein the porosity is measured by mercury porosimetry. Advantageously, the porous electrode has a porosity between 40 % and 85 %, preferably between 50 % and 80 %, more preferably between 60 % and 80 %.

Advantageously, the pores of the porous electrode have an average pore size between 0.05 µm and 5 µm, preferably between 0.075 µm and 2.5 µm, more preferably between 0.1 µm and 1 µm, as determined by means of capillary flow porometry.

Advantageously, the porous electrode has an ex-situ gas permeability between 0.50 and 50 L/min/cm²/bar, preferably between 0.60 and 30 L/min/cm²/bar, more preferably between 0.70 and 30 L/min/cm²/bar.

According to a third aspect of the invention, there is provided a water electrolyser as set out in the appended claims. The water electrolyser comprises the porous electrode according to the second aspect of the invention, or a porous electrode obtained by a method according to the first aspect of the invention.

### Brief description of the figures

Aspects of the invention will now be described in more detail with reference to the appended drawings, wherein same reference numerals illustrate same features and wherein:
Figure 1 schematically represents the method according to the invention.
Figures 2A and 2B show the SEM image of the top surface of 2 different porous electrodes obtained using the method of the invention.
Figure 3 shows the Hydrogen Evolution Reaction (HER) at 1M KOH, room temperature and 2 mV/sec scanning rate for 2 reference electrodes and 4 electrodes obtained using methods of the invention.
Figure 4 shows the oxygen evolution reaction, (OER) at 1M KOH, room temperature and 2 mV/sec scanning rate for 2 reference electrodes and 4 electrodes obtained by methods of the invention.
Figure 5 shows the OER overpotential at 1M KOH, room temperature and 2 mV/sec scanning rate under different conditions, for 2 reference electrodes and 4 electrodes obtained by methods of the invention.
Figure 6 shows the alkaline water electrolysis performance of 2 reference electrodes and 2 inventive porous electrodes at ambient conditions.
Figure 7 shows the alkaline water electrolysis performance of 2 reference electrodes and 1 inventive porous electrode at high temperature and pressure.

### Description of embodiments

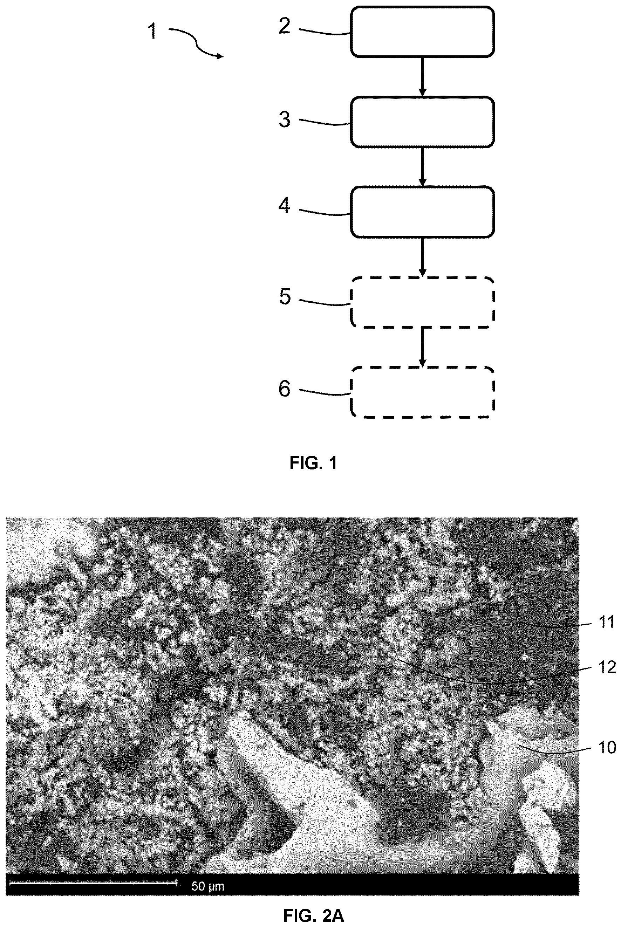

Fig. 1 schematically shows the production method 1 of a porous electrode according to the invention, wherein the porous electrode comprises a porous electrically conductive support and a porous matrix comprising a polymeric binder material and particles comprising an electrochemically active material.

The method 1 comprises an operation 2 of preparing a slurry, an operation 3 of applying the slurry to a porous electrically conductive support - in particular coating or impregnating the support with the slurry, and an operation 4 of subjecting the slurry of the coated support to phase inversion. Operation 4 has the purpose of solidifying the slurry, thereby forming the porous electrodes according to the invention. The method 1 further optionally comprises an operation 5 of drying the porous electrode, and/or one or more post-treatment operations 6.

Advantageously, the porous electrically conductive support provides mechanical support to the porous electrode. Alternatively or additionally, yet advantageously, the porous electrically conductive support is a current collector for the porous electrode. The porous electrically conductive support advantageously has an electrical conductivity of at least 10⁻⁵ S/m at 20 °C.

Advantageously, the porous electrically conductive support comprises or substantially consists of one or more (e.g. alloys) of nickel, silver, gold, aluminium, tungsten, zinc, lithium, iron, platinum, tin, titanium, manganese, and stainless steel. Preferably, the porous electrically conductive support comprises or substantially consists of nickel, silver, gold, aluminium, iron, stainless steel, and combinations of two or more thereof, more preferably nickel.

Advantageously, the porous electrically conductive support has a porosity of at least 50 %, preferably at least 60 %, more preferably at least 75 %, most preferably at least 90 %, as measured by mercury porosimetry. Advantageously, the pores of the porous electrically conductive support are macropores.

The porous electrically conductive support can have any three-dimensional (3D) structure that provides the porosity degrees mentioned hereinabove. Non-limiting shapes include a foam, in particular an open cell foam, a mesh, a grid, a woven structure, a non-woven structure, a knitted structure (e.g. a knitted mesh or spring), a crocheted structure and a braided structure.

The slurry comprises a polymeric binder material and particles comprising or substantially consisting of an electrochemically active material in a solvent. Advantageously, the polymeric binder material is substantially completely dissolved in the solvent.

Advantageously, the slurry comprises between 1 % and 25 % by weight of the polymeric binder material, preferably between 1% and 20 % by weight, based on the total weight of the slurry.

Advantageously, the polymeric binder material comprises or substantially consists of a phase inversion polymer, i.e. a polymer suitable for undergoing phase inversion. Examples of suitable polymeric binder materials (phase inversion polymers) include polysulfone, polyethersulfone, polyvinylidene fluoride, poly(acrylonitrile), polyethylene-co-vinylalcohol, polycarbonate, polyimide, polyamide, polyamide-imide, polyether imide, ionomers, N-ionomers, cellulose acetate, and copolymers of two or more thereof.

Advantageously, the polymeric binder material has an average molecular weight of at least 10000 g/mol, preferably at least 20000 g/mol, more preferably at least 25000 g/mol, most preferably at least 30000 g/mol.

The polymeric binder material can comprise or substantially consist of an inert (i.e. non-electrically conductive) phase inversion polymer, an electrically conductive phase inversion polymer, or a copolymer comprising a combination of both. When the polymeric binder material comprises or substantially consists of an electrically conductive phase inversion polymer, it can contribute to the electrical conductivity of the porous electrode. Non-limiting examples of suitable electrically conductive phase inversion polymers include polypyrrole (PPy), polyaniline (PAni), polythiophene (PTh), and poly(3,4-ethylenedioxythiophene) (PEDOT). Advantageously, PEDOT is used as phase inversion polymer in combination with another polymer, such as polystyrene sulfonate (PSS).

Advantageously, the slurry comprises between 2 % and 98 % by weight of particles comprising an electrochemically active material, preferably between 10 % and 80 % by weight, more preferably between 15 % and 70 % by weight, even more preferably between 50% and 98% by weight, based on the total weight of the slurry. The inventors have discovered that for slurries comprising less than 10 % by weight of such particles, the metal loading in the produced porous electrode is insufficient to provide the porous electrode with a sufficient electrochemical activity and/or a sufficient electrical connectivity between the particles. In other words, slurries comprising less than 10 % by weight of particles lead to porous electrodes having inferior properties.

Advantageously, the particles comprising or substantially consisting of an electrochemically active material are selected so that they do not react with the solvent.

Advantageously, the electrochemically active material comprises of substantially consists of an electrochemically active metal selected from the group consisting of nickel, tin, copper, iron, manganese, cobalt, zinc, titanium, bismuth, selenium, and noble metals. A particularly preferred electrochemically active metal is nickel. Advantageously, the electrochemically active material, particularly the electrochemical active metal, is present in the particles as one or a combination of a metallic solid, a metal oxide, or a metal dichalcogenide, for example a selenide or a sulphide. Non-limiting examples include ZnO, BiSe, CuS, CuO and (Cu,Ag)OₓS_{y}.

Advantageously, the particles comprise two or more electrochemically active materials, for example in the form of core-shell particles, clusters on the particles, stabilized single atoms on the particles, and a particle having a layered structure. The particles can have various shapes, such as, without being limited thereto, a spherical shape or a cylindrical shape (e.g. a filament or a rod). The slurry can comprise particles having various shapes.

Advantageously, the particles have a bimodal particle size distribution. Advantageously, the bimodal particle size distribution is obtained by a mixture of fine particles and coarse particles. The fine particles advantageously have an average size of below 1 µm, such as 750 nm or less, preferably 500 nm or mess (i.e., nanoparticles according to the IUPAC classification). The coarse particles advantageously have an average size of at least 1 µm, such as 5 µm or more.

Advantageously, the bimodal particle size distribution comprises between 25 % and 75 % of the particles, preferably between 40 % and 60 %, such as about 50 %, having a size between 1 µm and 250 µm, preferably between 5 µm and 200 µm, more preferably between 5 µm and 150 µm, and between 75 % and 25 % of the particles, preferably between 60 % and 40 %, such as about 50 %, having a size between 1 nm and 750 nm, preferably between 5 nm and 500 nm, more preferably between 10 nm and 250 nm.

The inventors have surprisingly discovered that using particles having a bimodal particle size distribution, and in particular obtained by a mixture of fine and coarse particles, allows to obtain a porous electrode having both an increased electrochemically active surface area and an excellent electrical connectivity, when compared to porous electrodes comprising only fine particles or only coarse particles.

Advantageously, the slurry comprises between 10 % by weight and 68 % by weight of a solvent, preferably between 15 % by weight and 60 % by weight, more preferably between 20 % by weight and 55 % by weight, most preferably between 20 % and 50 % by weight, based on the total weight of the slurry.

Advantageously, the solvent comprises or substantially consists of a dialkyl carbonate, a cycloaliphatic ether, a liquid pyrrolidone, an aliphatic ketone, or liquid piperidines, or combinations thereof.

The dialkyl carbonate can be linear or branched. Non-limiting examples of dialkyl carbonates include ethylene carbonate, propylene carbonate, diethyl carbonate, diallylcarbonate, methyl propyl carbonate, methyl isopropyl carbonate, methyl butyl carbonate, methyl isobutyl carbonate, methyl pentyl carbonate and methyl hexyl carbonate.

Non-limiting examples of cycloaliphatic ethers include oxirane, tetrahydrofuran, dioxane, dioxolane and dioxepane.

Non-limiting examples of liquid pyrrolidones include N-methylpyrrolidinone (NMP), N-ethyl-pyrrolidinone (NEP) and 2-pyrrolidone.

Non-limiting examples of aliphatic ketones include acetone, methyl ethyl ketone, diethyl ketone, methyl propyl ketone, methyl isopropyl ketone, methyl butyl ketone, methyl isobutyl ketone, methyl sec-butyl ketone and methyl tert-butyl ketone.

Non-limiting examples of liquid piperidines include formyl piperidine, N-methylpiperidine, N-ethylpiperidine and N-propylpiperidine.

Advantageously, the solvent is a non-volatile solvent. With a non-volatile solvent is meant a solvent having a boiling point of at least 150 °C, preferably at least 175 °C, more preferably at least 180 °C at an atmospheric pressure of 1 bar. By using a non-volatile solvent, evaporation of the solvent during the slurry preparation and the application step is avoided. Consequently, the pores are formed during the phase inversion in a controlled way, allowing control of the (average) pore size and the porosity degree of the porous electrode obtained. As a result the degree of porosity of the obtained porous electrodes is higher than when solvents having lower boiling points, such as boiling points below 100 °C at an atmospheric pressure of 1 bar (i.e. volatile solvents) are used. In said instance, solvent will already evaporate during slurry formation and the application of the slurry to the support, with an uncontrolled increase in the amount of polymer binder resulting in the formation of a less porous matrix.

Examples of non-volatile solvents include NMP, NEP, acetamide, dimethylsulphoxide (DMSO), formyl piperidine, s-carprolactam, γ-butyrolactone, ethylene carbonate, propylene carbonate, methyl butyl carbonate, methyl isobutyl carbonate, methyl pentyl carbonate, methyl hexyl carbonate, 2-pyrrolidone, N-methylpiperidine, N-ethylpiperidine, N-propylpiperidine, γ-valerolacetone, ε-caprolactone and δ-decalactone.

The inventors have surprisingly discovered that as long as the weight ratio of the polymeric binder material to the particles in the slurry is between 2:98 and 50:50 and the slurry comprises between 32 % and 80 % by weight of polymeric binder material and particles, based on the total weight of the slurry, the porous electrodes obtained by the methods of the present disclosure exhibit improved electrical and electrochemical properties, in particular an improved electrochemical activity in alkaline water electrolysis. The thus obtained electrodes can be used as anode and cathode, and are suitable for use in alkaline water electrolysis. The porous electrodes of the invention exhibits better electrochemical performance in alkaline water electrolysis, CO₂ reduction, fuel cells and batteries. It can have a broader field of applications than commercially available reference electrodes.

The inventors have discovered that when the weight ratio of the polymeric binder material to the particles in the slurry is outside of the aforementioned ranges and the slurry comprises less than 32 % by weight of total amount of polymeric binder material and particles, based on the total weight of the slurry, the porous electrode obtained from the slurry does not have sufficient electrochemically active material to function as a proper electrode.

The slurry can comprise further additives, such as for example a pore forming agent.

Advantageously, the slurry comprises up to 10 % by weight of pore forming agent, such as 7.5 % by weight, or 5 % by weight, based on the total weight of the slurry. A particularly preferred pore forming agent is polyvinylpyrrolidone (PVP).

The slurry can be prepared by methods known in the art.

According to a first embodiment, a first mixture is prepared by dissolving the polymeric binder material in a first portion of the solvent. A second mixture is prepared by adding the particles to the remainder of the solvent. Then, the first solution is added to the second mixture, or vice versa, thereby obtaining the slurry. If present, the pore forming agent is advantageously added to the second mixture.

According to a second embodiment, the polymeric binder material and the particles, and, if present, the pore forming agent, are added simultaneously or one after the other to the solvent, thereby obtaining the slurry.

The operation 3 of applying the slurry to the porous electrically conductive support by means of procedures or techniques known in the art. Advantageously, the porous electrically conductive support is coated or impregnated with the slurry. Coating or impregnation of the porous electrically conductive support with the slurry may be achieved by one or more of pouring of the slurry on top of the support, immersing the support in the slurry, drawing the support through the slurry, spray coating, dip coating, casting (e.g. by using a casting knife), doctor blading, induction, pressing, spin-coating, filtration, vacuum deposition, and laminating.

Advantageously, the slurry is applied to the porous electrically conductive support by means of impregnating the support with the slurry, as the inventors have found that impregnation results in the best performance.

Advantageously, the slurry is applied to the exposed surfaces of the porous electrically conductive support, i.e. its external and/or internal surfaces, or to one or two sides of the porous electrically conductive support. Advantageously, the slurry is applied for a thickness between 10 µm to 500 µm, in particular between 50 µm and 200 µm. The thickness of the applied slurry can vary from one area of the porous electrically conductive support to another area.

The slurry of the porous electrically conductive support comprising the slurry, e.g. the coated and/or impregnated porous electrically conductive support, is then subjected to phase inversion in operation 4, thereby converting the dissolved polymeric binder material to a porous solidified form. In other words, phase inversion induces pores to the obtained electrode. The phase inversion can be performed by processes known in the art.

A preferred phase inversion process comprises liquid induced phase inversion (LIPS), vapour induced phase inversion (VIPS), or a combination of LIPS and VIPS. The liquid and the vapour, which may be a same or different compound are non-solvents to the polymeric binder material. Hence, in operation 4 the coated/impregnated porous electrically conductive support is contacted with a non-solvent (which may be in liquid phase and/or in vapor phase) for the polymeric binder material. This creates a demixing of the applied slurry in a phase rich of the polymeric binder material and a phase poor of the polymeric binder material. Upon further separation, the solubility of the solvent is further reduced and the polymeric binder material precipitates, thereby obtaining a matrix comprising the polymeric binder material in which the particles comprising the electrochemically active material are dispersed.

Advantageously, the non-solvent comprises or substantially consists of a polar protic solvent. Non-limiting examples of suitable non-solvents for the polymeric binder materials of the invention include water, an alcohol, an acid, or combinations thereof. Particularly preferred non-solvents include water and mixtures of NMP and water, for example having a volume ratio of NMP to water between 0:100 (100% water) and 75:25, for example 50:50.

Advantageously, the phase inversion is induced by immersing the coated/impregnated support in the non-solvent and/or by contacting the electrode green body with a vapour of the non-solvent. Alternatively or additionally, yet advantageously, the non-solvent is atomised onto the coated/impregnated support.

It will be understood that the conditions of the phase-inversion process, as well as the choice of polymeric binder material, solvent, optional additives and non-solvent contribute to the degree of porosity and the size of the pores of the porous electrode obtained. In other words, phase inversion allows to control of the porosity and pore size of the porous electrode.

Alternatively, the phase inversion operation 4 comprises thermally induced phase inversion. Thermally induced phase inversion comprises the use of a solvent into which the polymer is dissolved at elevated temperatures, while the polymer is insoluble in the solvent at lower temperatures. The slurry is prepared 2 and applied 3 at elevated temperature. The coated/impregnated porous electrically conductive support is then cooled to a temperature at which the polymeric binder material is insoluble in the solvent, thereby precipitating the polymeric binder material and obtaining the porous electrode.

The porous electrode structure obtained after phase inversion can further be dried in an optional operation 5. Advantageously, the optional drying 5 removes any remaining solvent and, if the phase inversion 4 was performed by means of a non-solvent for the polymeric binder material, any remaining non-solvent. Advantageously, the porous electrode structure obtained after phase inversion is dried 5 by exposing it to an elevated temperature (heating) and/or to a reduced pressure.

Advantageously, the drying operation 5 comprises heating the porous electrode structure to a temperature below the maximum continuous service temperature of the polymeric binder material as defined by the Underwriter Laboratory (UL 746B) Relative Thermal Index (RTI). The maximum continuous service temperature of the polymeric binder material is the maximum acceptable temperature above which the mechanical properties or the electrical properties of the polymeric binder material are significantly degrading over the reasonable lifetime of the porous electrode. Consequently, by heating to a temperature below the maximum continuous service temperature of the polymeric binder material, damage to the polymeric binder material in the porous electrode is avoided.

Optionally, the porous electrode can also be subjected to one or more further post-treatment operations 6. Advantageously, upon performing a post-treatment operation 6, the contact between the particles comprising or substantially consisting of the electrochemically active material is improved, thereby improving the electrical conductivity of the porous electrode. Alternatively or additionally, yet advantageously, the post-treatment improves the immobilisation of the particles comprising or substantially consisting of the electrochemically active material in the porous matrix of the porous electrode, thereby reducing the risk of leaching of the electrochemically active material from the porous electrode.

Advantageously, the optional post-treatment operation 6 is performed at a temperature below the maximum continuous service temperature of the polymeric binder material as defined by the Underwriter Laboratory (UL 746B) Relative Thermal Index (RTI).

Non-limiting examples of post-treatment operations 6 include electroplating, immersion, thermal annealing and pressing/calendaring the porous electrode, for example with further components of the electrode, such as an electrode active material and/or a current collector.

The porous electrode of the present invention comprises or substantially consists of a porous electrically conductive support and a porous composite. The porous composite comprises or substantially consists of a porous matrix, which comprises or substantially consists of a polymeric binder material, and particles comprising or substantially consisting of an electrochemically active material. Advantageously, the particles are embedded or dispersed in the matrix, thereby forming the porous composite. The porous electrically conductive support, the polymeric binder material and the particles are advantageously as described hereinabove.

The porous composite comprises between 50 % and 98 % by weight of the particles and between 2 % and 50 % by weight of polymeric binder material, based on the total weight of the porous composite.

The porous electrode has a porosity equal to or higher than 40 %, preferably at least 50 %, more preferably at least 60 %, as measured by mercury porosimetry. Advantageously, the porous electrode has a porosity of at most 90 %, preferably at most 80 %, as measured by mercury porosimetry. A porosity higher than 90 % leads to porous electrodes having insufficient mechanical strength, and are thus very prone to structural damage. A porosity below 30 % is found to be insufficient for providing a sufficient accessibility to the electrochemically active material.

Advantages of a porous electrode having a porosity between 30 % and 90 % include, without being limited thereto:
- a good accessibility of the electrochemically active material;
- a high electrochemical surface area of the porous electrode, in particular a high volumetric surface area (electrochemical surface area per volume unit of porous electrode), thereby providing more active sites for electrochemical reactions with the electrochemically active material;
- facilitated transport of ions and electrons in the porous electrode, thereby reducing the risk to ohmic and mass transfer losses;
- improved electrochemical performance and durability (life-time) of the porous electrode;
- a homogeneous distribution of the electrochemically active material throughout the obtained porous electrode.

Advantageously, the average pore size of the porous electrode is between 0.01 µm and 10 µm, preferably between 0.02 µm and 5 µm, more preferably between 0.05 µm and 1 µm, as determined by capillary flow porometry.

Advantageously, the porous electrode has a microporous volume of at least 20 %, preferably at least 25 %, more preferably at least 30 %, such as at least 40 % or at least 50 % of the microporous volume of the particles comprising or substantially consisting of the electrochemically active material, wherein the microporous volume is determined by the t-plot method on the argon isotherms at 87 K. With "microporous volume" is meant the total volume of micropores in an article, e.g. the porous electrode and the particles. Porous electrodes having such a microporous volume allow the diffusion of water and other reactants into the electrode material, and the diffusion of gas out of the electrode material. Consequently, the porous electrode is suitable for use in a water electrolyser.

Advantageously, the porous electrode has a thickness of at least 30 µm, such as at least 50 µm, or at least 100 µm, preferably at least 150 µm, more preferably at least 200 µm, most preferably at least 250 µm. Advantageously, the thickness of the porous electrode is at most 2000 µm, preferably at most 1500 µm, more preferably at most 1000 µm, most preferably at most 750 µm, for example at most 500 µm.

Advantageously, the porous electrode has an ex-situ gas permeability of between 0.001 and 1000 L/(min*cm²*bar), preferably between 0.01 and 500 L/(min*cm²*bar), for example between 0.05 and 250 L/(min*cm²*bar), between 0.1 and 100 L/(min*cm²*bar), more preferably between 0.2 and 50 L/(min*cm²*bar),, most preferably between 0.5 and 25 L/(min*cm²*bar), as measured by capillary flow porometer.

### Examples

### Example 1: Preparation of porous electrodes

Three different porous electrically conductive support structures were used to prepare 3 reference porous electrodes and five porous electrodes of the invention: a nickel foam (NI00-FA-000152, Goodfellow) with a thickness of 1.6 mm and a porosity of 95 %, a nickel mesh (400 mesh, Heanjia super metals Co., Ltd) with a thickness of 73 µm and a 30 µm pore size, and a nickel spring (a knitted wire mesh, nickel 2.4066 wire diameter 0,16 mm twice, Rhodius GmbH i. Ins).

The three reference porous electrodes consisted of the three porous electrically conductive support structures (Ni foam, Ni mesh, Ni spring) without any further treatment applied to them.

For the five inventive porous electrodes, the Ni foam and the Ni mesh were used as porous electrically conductive supports. All five inventive porous electrodes were prepared starting from a same slurry, which was applied in different thicknesses and/or on 1 or both sides of the Ni mesh or Ni foam.

The slurry was prepared using polysulfone (PSU) as polymeric binder material, metallic nickel microparticles (in particular Ni powder with an average particle size of 50 µm) as particles comprising an electrochemically active material, NMP as solvent and PVP as pore-forming agent.

First, 1 g PSU and 1 g PVP were dissolved in 5 mL NMP by rotating the mixture for 2 min at 2000 rpm using a Thinky planetary centrifugal mixer (Thinky Corporation, U.S.A.). Then, 10 g of nickel microparticles were added and the mixture was rotated for another 2 min at 2000 rpm. After that, the remaining 9 g of nickel particles were added and the mixture was rotated for an additional 2 minutes at 2000 rpm. Next, 5 mL of NMP was added and the slurry was mixed (rotated) for 2 more minutes at 2000 rpm. The resulting slurry was then degassed for 1.5 minutes at 900 rpm.

The slurry was then applied at one side of the respective Ni support for each one of the five inventive porous electrodes. The slurry was applied by pouring it on a doctor blade, and spreading the slurry with the doctor blade on the Ni support. For the 200 µm thick slurries, the spreading was performed with a gap of 200 µm at a speed of 0.25 m/min (porous electrodes IE-1, IE-4 and IE-5 of Table 1). For the 50 µm thick slurries, the spreading was performed with a gap of 50 µm at a speed of 0.25 m/min (porous electrodes IE-2 and IE-3 of Table 1). The Ni supports coated with the slurry were then transferred to a coagulation bath containing a non-solvent mixture of NMP and water (50:50) at room temperature for 30 minutes. In case of the two-side coated electrodes (porous electrodes IE-3 and IE-5), the one-side coated Ni support was then dried using dry air or tissue paper gently to remove the water from the sample. The remaining slurry was coated on the other side the same way as above (same gaps, same speeds), and the phase inversion step (30 minutes in a coagulation bath containing a non-solvent mixture of NMP and water (50:50) at room temperature) was repeated. Afterwards, the obtained porous electrodes were immersed in reverse osmosis (RO) water overnight, followed by heating in water at 80 °C for 1 hour to remove any remaining solvent, PVP, or impurities. The electrodes were then stored in a plastic container containing some water (in wet form) until further characterization.

All five inventive porous electrodes comprised a porous matrix comprising 95 % by weight of nickel microparticles and 5 % by weight of PSU, based on the total weight of the porous matrix (i.e. the weight of the porous electrode minus the weight of the Ni support).

A fourth reference porous electrode (referred to as CE-1) was prepared from the slurry alone, without the use of any porous support (Ni mesh, Ni foam, Ni spring). Table 1 summarizes the composition of the reference and inventive porous electrodes. This fourth reference electrode was prepared by pouring the slurry onto a doctor blade, followed by casting on a clean glass plate with a defined gap of 200 µm at a speed of 0.25 m/min. The glass plate with the casted slurry was then placed in a coagulation bath containing 50/50 vol.% NMP/water, at room temperature for 30 minutes to induce phase inversion. The obtained porous electrode was then immersed in RO water overnight, followed by heating in water at 80 °C for 1h to remove any remaining solvent, PVP or impurities. This reference porous electrode consisted of a porous matrix comprising 95 % by weight of nickel microparticles and 5 % by weight of PSU, based on the total weight of the porous matrix (i.e. of the porous electrode).

**Table 1: Overview of the porous electrodes**

| **Porous electrode Name** | **Support** | **Thickness coated slurry** |
|---|---|---|
| Ni mesh (Reference) | Ni mesh | / |
| Ni foam (Reference) | Ni foam | / |
| Ni spring (Reference) | Ni spring | / |
| CE-1 (Reference) | / | 200 µm |
| IE-1 (Inventive) | Ni mesh | 200 µm on one side |
| IE-2 (Inventive) | Ni mesh | 50 µm on one side |
| IE-3 (Inventive) | Ni mesh | 50 µm on both sides |
| IE-4 (Inventive) | Ni foam | 200 µm on one side |
| IE-5 (Inventive) | Ni foam | 200 µm on both sides |

The five porous electrodes obtained according to methods of the present invention (IE-1, IE-2, IE-3, IE-4 and IE-5 of Table 1) were then characterized in terms of density (bulk density and apparent density), porosity, average pore size (*Avg pore size*), total cumulative volume (*Total CV*) and total specific surface area (*Total SSA*). The total cumulative volume is a measure of the total pore volume in the electrode. The results are presented in Table 2.

The porosity, the total cumulative volume and the total specific surface area were determined using mercury porosimetry. The density of the electrodes was evaluated using helium pycnometry. The average pore size was determined using Capillary Flow Porometry (CFP), using PoroluxTM 1000 as wetting agent.

**Table 2: density, porosity, average pore size, total cumulative volume and total specific surface area of various porous electrodes of the invention**

| **Electrode** | **Total CV (mm³/g)** | **Total SSA (m²/g)** | **Avg pore size (µm)** | **Porosity (%)** | **Bulk density (g/cm³)** | **Apparent density (g/cm³)** |
|---|---|---|---|---|---|---|
| IE-1 | 224.04 | 2.93 | 4.546 | 61.7 | 2.75 | 7.20 |
| IE-2 | 217.10 | 3.11 | 4.159 | 58.2 | 2.68 | 6.42 |
| IE-3 | 311.64 | 2.25 | 3.945 | 72.7 | 2.33 | 8.56 |
| IE-4 | 211.92 | 2.13 | 5.391 | 61.3 | 2.89 | 7.47 |
| IE-5 | 255.04 | 2.49 | 5.699 | 90.2 | 3.54 | 35.95 |

The high total cumulative volume (CV) values confirm the porous nature of the electrodes prepared. Such total cumulative volume values are expected to play a positive role in enhancing the mass transport during water electrolysis operation. By applying (impregnating) the active material inside of the porous support, the methods of the present disclosure allow to use the previously useless area of the Ni mesh or Ni foam for reaction, whilst keeping a high-enough porosity for gas and liquid transport. It has also been observed that the stability of the active species is high as it is well incorporated (impregnated) into the base porous material matrix.

The microstructure of the electrode, including its surface and cross-section, is analysed using scanning electron microscopy (SEM).

Fig. 2A shows the SEM image of the cross-section of the porous electrode IE-5, showing the Ni foam 10 as porous electrically conductive support and a porous matrix of the PSU polymeric binder 11 comprising the nickel particles 12.

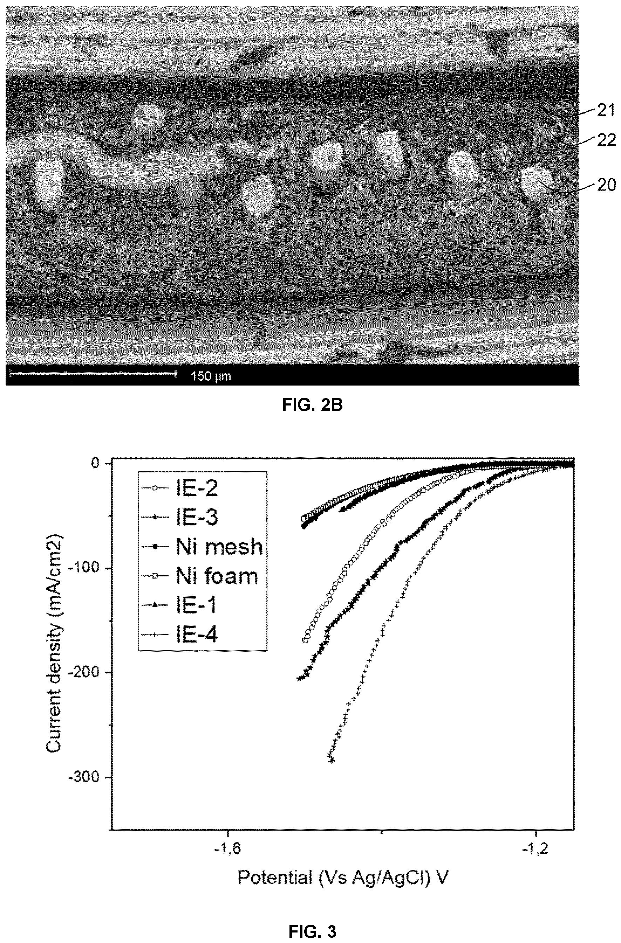

Fig. 2B shows the SEM image of the cross-section of the porous electrode IE-1, showing the Ni mesh 20 as porous electrically conductive support and a porous matrix of the PSU polymeric binder 21 comprising the nickel particles 22.

An H-cell was built using a 1 M KOH solution as both catholyte and anolyte and a Fumasep^{®} FBM single-film bipolar membrane as a separator. An Ag/AgCI reference electrode or RHE electrode was inserted close to the working electrode. A metallic Ni filter with an area of about 3 cm² was used as the counting electrode. The working electrode was clamped by a stainless-steel electrode holder with an area of approximately 1.5 cm² immersed in the electrolyte.

The Hydrogen Evolution Reaction (HER) overpotential was measured at 2 mV/s at 1 M KOH and room temperature. Fig. 3 shows the result for 4 inventive electrodes (IE-1, IE-2, IE-3 and IE-4 of Table 1) and 2 reference electrodes (Ni mesh and Ni foam of Table 1). From Fig. 3 it is clear that all inventive porous electrodes show a lower overpotential at any given potential value, indicating a higher electrochemical activity.

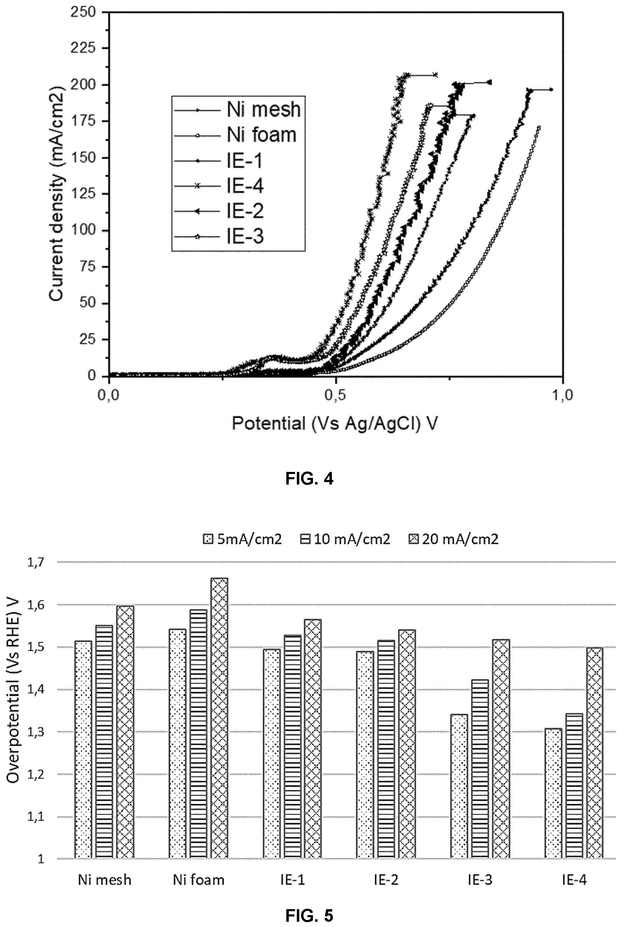

The Oxygen Evolution Reaction (OER) overpotential was measured at 2 mV/s at 1 M KOH and room temperature. Fig. 4 shows the result for 4 inventive electrodes (IE-1, IE-2, IE-3 and IE-4 of Table 1) and 2 reference electrodes (Ni mesh and Ni foam of Table 1). From Fig. 4 it is clear that all inventive porous electrodes show a higher overpotential at any given potential value, indicating a higher electrochemical activity.

The overpotential was then calculated at three different current densities (Fig 5), for the same 4 inventive electrodes and the same 2 reference electrodes. It is known that higher current densities lead to higher overpotential values. The lower the overpotential value, the lower the energy that is required to produce the gases (O₂ and H₂). Among the electrodes presented in Fig 5, at all current densities investigated, the inventive electrodes showed lower overpotential values than the reference electrodes. Further, porous electrode IE-4 had the lowest overpotential, followed by IE-3, IE-2 and IE-1.

A different thickness of the slurry (and resulting matrix) for the same Ni mesh as support, wherein the slurry was applied at one side, does not seem to influence the results much (IE-1 vs. IE-2). When the slurry was applied at both sides of the Ni mesh (IE-3) instead of at 1 side (IE-2), the overpotential is significantly lower, which can be contributed to the more homogeneous presence of the porous matrix in the porous electrode. Due to its higher porosity, the use of a Ni foam (IE-4) instead of a Ni mesh (IE-1) for the same thickness of the slurry, which was applied at one side only, allows to further decrease the overpotential values.

### Example 2: Alkaline water electrolyser at ambient conditions

The performance of two inventive porous electrodes, IE-3 and IE-5, as well as of two reference electrodes, Ni foam and Ni mesh, respectively, of Example 1 at ambient conditions (25 °C and atmospheric pressure) was investigated using a 13 cm² round water electrolyser. The electrodes were employed as both the anode and the cathode. A home-made composite membrane with a thickness of 200 µm was used as a separator. The electrolyte was 6 M KOH.

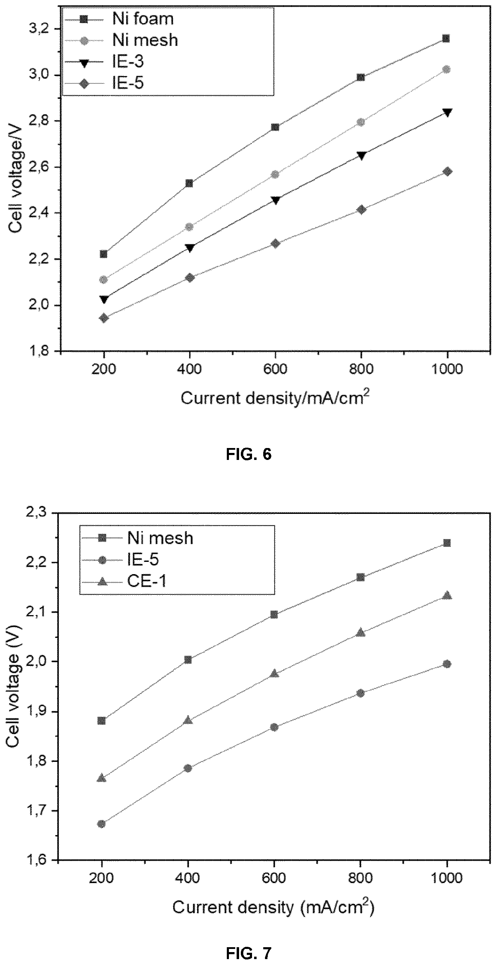

Fig. 6 shows the cell voltage as function of the current density for the four electrodes. It is clear that both inventive porous electrodes lead to a lower cell voltage than the two reference electrodes for all current densities, thereby presenting a reduced overpotential and thus outperforming the reference electrodes at ambient condition. For example, the cell voltage of electrode IE-5 at 1000 mA/cm² is only 2.58 V, whereas it is 3.16 V for the reference (commercial) Ni foam electrode. This is an overpotential reduction of 580 mV, at ambient temperature and pressure.

### Example 3: Alkaline water electrolyser at high temperature and pressure

The performance of inventive porous electrode IE-5, as well as two reference electrodes, Ni mesh and CE-1, respectively, of Example 1 at high temperature (70 °C) and pressure (10 bar) was investigated using a 13 cm² round water electrolyser. The electrodes were employed as both the anode and the cathode. A home-made composite membrane with a thickness of 200 µm was used as a separator. The electrolyte was 6.9 M KOH.

The results of the inventive electrode IE-5, and the reference electrodes CE-1 and Ni mesh are shown in Fig 7, showing the cell voltage in function of the current density. It clearly shows that the inventive electrode IE-5 outperforms both reference electrodes, indicating the importance of both the porous electrically conductive support as electrical conductor and the porous matrix comprising a polymeric binder and electrochemically active particles. In particular, a cell voltage lower than 2 V at 1000 mA/cm² is achieved using IE-5 electrode, whereas both reference electrodes have a voltage of at least 2.1 V. This is an overpotential reduction of more than 100 mV, at high temperature and pressure.

## Claims

1. A method (1) for producing a porous electrode comprising the steps of:
- preparing (2) a slurry comprising a solvent, between 1 % and 25 % by weight of a polymeric binder material and between 10 % and 80 % by weight of particles comprising an electrochemically active material, based on the total weight of the slurry, wherein the polymeric binder material is at least partially dissolved in the solvent,
- applying (3) the slurry to a porous electrically conductive support (10, 20), thereby obtaining a coated support comprising the slurry, and
- subjecting the slurry of the coated support to phase inversion (4), thereby forming the porous electrode, wherein the porous electrode comprises the porous electrically conductive support (10, 20) and a porous composite comprising a porous matrix and the particles (12, 22) comprising the electrochemically active material, wherein the porous matrix comprises the polymeric binder material (11, 21), and wherein the particles are dispersed in the porous matrix,
**characterized in that** the weight ratio of the polymeric binder material to the particles in the slurry is between 2:98 and 50:50, and a total amount of the polymeric binder material and particles in the slurry is between 32 % and 80 % by weight, based on the total weight of the slurry.

2. The method according to claim 1, wherein the electrochemically active material is an electrochemically active metal selected from the group consisting of nickel, tin, copper, iron, manganese, cobalt, zinc, titanium, bismuth, selenium, and noble metals.

3. The method according to any one of the preceding claims, wherein the electrochemically active material is present in the particles as one or a combination of a metallic solid, a metal oxide, or a metal dichalcogenide.

4. The method according to any one of the preceding claims, wherein the particles have an average particle size between 5 nm and 200 µm, preferably between 10 nm and 100 µm, as measured by means of Scanning Electron Microscopy.

5. The method according to any one of the preceding claims, wherein the particles have a bimodal particle size distribution.

6. The method according to claim 5, wherein between 25 % and 75 % of the particles have an average particle size between 1 µm and 250 µm, and between 75 % and 25 % of the particles has an average particle size between 5 nm and 500 nm.

7. The method according to any one of the preceding claims, wherein the polymeric binder material comprises a non-ion conductive polymer.

8. The method according to any one of the preceding claims, wherein the slurry further comprises between 1 % and 10 % by weight of a pore forming agent, based on the total weight of the slurry.

9. The method according to any one of the preceding claims, wherein the solvent has a boiling point of at least 180 °C at an atmospheric pressure of 1 bar.

10. The method according to any one of the preceding claims, wherein applying (3) the slurry to the porous electrically conductive support (10, 20) comprises one or a combination of coating and/or impregnating the porous electrically conductive support (10, 20) with the slurry.

11. The method according to any one of the preceding claims, wherein phase inversion (4) of the porous electrically conductive support comprising the slurry comprises contacting the porous electrically conductive support comprising the slurry with a non-solvent for the polymeric binder material so as to precipitate the polymeric binder material, thereby obtaining the porous electrode, preferably wherein the solvent comprises a polar aprotic solvent and the non-solvent for the polymeric binder material comprises a polar protic solvent.

12. A porous electrode comprising a porous electrically conductive support (10, 20) and a porous composite comprising a porous matrix and particles (12, 22) comprising an electrochemically active material, wherein the porous matrix comprises a polymeric binder material (11, 21), wherein the particles are dispersed in the porous matrix, and wherein the porous composite comprises between 50 % and 98 % by weight of the particles (12, 22) and between 2 % and 50 % by weight of polymeric binder material (11, 21), based on the total weight of the porous composite, **characterized in that** the porous electrode has a porosity equal to or higher than 40 %, as measured by mercury porosimetry.

13. The porous electrode according to claim 12, wherein the pores have an average pore size between 0.05 µm and 5 µm, preferably between 0.1 µm and 5 µm, more preferably between 0.1 µm and 1 µm, as determined by means of capillary flow porometry.

14. The porous electrode according to claim 12 or 13, wherein the porous electrode has an ex-situ gas permeability between 0.50 and 50 L/min/cm²/bar, preferably between 0.60 and 30 L/min/cm²/bar, more preferably between 0.70 and 30 L/min/cm²/bar, as determined by means of capillary flow porometry.

15. A water electrolyser comprising the porous electrode according to any one of claims 12 to 14, or a porous electrode obtained according to the method of any one of claims 1 to 11.
